# EUROPEAN PATENT SPECIFICATION

(11) **EP 2 762 655 B1**
(45) Date of publication and mention of the grant of the patent: **27.06.2018**
(21) Application number: 12837517.7
(22) Date of filing: 27.09.2012
(51) Int. Cl.: E04F 13/07, B32B 5/24, E04F 13/00, D21H 27/20, D06N 7/00, B32B 27/10, B32B 27/12, B32B 27/18, B32B 27/32, B32B 3/30, B32B 7/02

(54) **SHEET FOR COVERING WALLS OF EARTHQUAKE-RESISTANT STRUCTURES, METHOD FOR SCREENING SAME, AND CONSTRUCTION METHOD USING SAME**
FOLIE ZUM ÜBERZIEHEN VON WÄNDEN ERDBEBENFESTER STRUKTUREN, PRÜFVERFAHREN DAFÜR SOWIE KONSTRUKTIONSVERFAHREN DAMIT
FEUILLE POUR COUVRIR DES PAROIS DE STRUCTURES RÉSISTANT AUX TREMBLEMENTS DE TERRE, PROCÉDÉ POUR TRIER CELLE-CI, ET PROCÉDÉ DE CONSTRUCTION L'UTILISANT

(30) Priority: 27.09.2011 JP 2011211582
(43) Date of publication of application: 06.08.2014
(73) Proprietor: Dai Nippon Printing Co., Ltd., Tokyo 162-8001 (JP)
(72) Inventor: Netsu, Yoshiaki, Tokyo 162-8001 (JP); Wakamatsu, Yuji, Tokyo 162-8001 (JP)
(74) Representative: Müller-Boré & Partner Patentanwälte PartG mbB
(86) International application number: PCT/JP2012/074919
(87) International publication number: WO 2013/047673

(56) References cited:
- JP-A- 2000 015 752
- JP-A- 2000 291 224
- JP-A- 2006 097 210
- JP-A- 2008 142 911
- JP-A- 2010 185 166

## Description

### TECHNICAL FIELD

The present invention relates to the use of a sheet for covering the wall of an earthquake-resistant structure, which is capable of suppressing breakage of wallpaper even when subjected to a shake caused by an earthquake. Moreover, the present invention relates to a method for screening the sheet for covering the wall of an earthquake-resistant structure. Furthermore, the present invention relates to a construction method of constructing the sheet for covering the wall of an earthquake-resistant structure as the wallpaper for interior finishing of an earthquake-resistant structure.

### BACKGROUND ART

In such a country as Japan where earthquakes occur frequently, it is essential for building structures to be provided with measures against earthquake. Although many reports on the technique relating to measures against earthquake for building structures have hitherto been made, currently, the building structures provided with measures against earthquake are roughly classified into three categories of the earthquake-resistant structure, the vibration control structure and the base isolation structure. The earthquake-resistant structure is a structure allowing a building structure to be imparted with strength capable of resisting an earthquake, and actively oscillating against an earthquake to absorb the earthquake vibration. Moreover, the vibration control structure is a structure equipped with a vibration control device such as a high damping rubber and absorbing the earthquake by the vibration control device to suppress swinging of a building structure. Moreover, the base isolation structure is a structure in which rubber and the like are interposed at a foundation part to separate the building structure and the foundation and a shake is not transmitted directly to the building structure.

Thanks to advances in measures against earthquake, the building structures have hitherto been maintained without generating a structural defect such as collapse and breakage against an earthquake within assumption. However, even in the case where a building structure is capable of resisting a shake caused by an earthquake, breakage of the wallpaper for interior finishing of the building structure may be generated since the wallpaper cannot resist the shake. In particular, in an earthquake-resistant structure to which the shake caused by an earthquake is transmitted directly, breakage of the wallpaper may be generated even by a small-scale earthquake. In particular, at the joint part of a backing board for interior finishing fitted to an earthquake-resistant structure, the positional displacement of backing by the shake of an earthquake is liable to occur, and there is a problem that breakage of the wallpaper is liable to be generated. Even in the case where a structural defect of a building structure is not generated, breakage of the wallpaper is not preferred because it impairs the esthetic appearance, and furthermore, exchange of the wallpaper imposes the economic burden on landlords.

Although the progress of technological development of wallpaper is remarkable and various kinds of wallpaper have been developed up to the present time, in an earthquake-resistant structure to which the shake caused by an earthquake is transmitted directly, the current state is that there has been no report about what kind of properties should be provided to the wallpaper to be used in order to suppress breakage in the case where the wallpaper is subjected to the shake caused by an earthquake. Backed up with the conventional art like this, the development of a sheet for covering the wall of an earthquake-resistant structure, which is capable of suppressing breakage of wallpaper even when subjected to a shake caused by an earthquake, has been eagerly desired.

JP 2006-097210 A discloses a wall paper in which at least a first non-foamed resin layer, a foamed resin layer, a second non-foamed resin layer, a pattern layer, and a surface-protecting layer are sequentially laminated.

### DISCLOSURE OF THE INVENTION

### PROBLEMS TO BE SOLVED BY THE INVENTION

The present invention is aimed at providing a sheet for covering the wall of an earthquake-resistant structure, which is capable of suppressing breakage of wallpaper even when subjected to a shake caused by an earthquake. Moreover, the present invention is also aimed at providing a method for screening the sheet for covering the wall of an earthquake-resistant structure. Furthermore, the present invention is also aimed at providing a construction method of using the sheet for covering the wall of an earthquake-resistant structure to construct it as the interior finishing of an earthquake-resistant structure.

### SOLUTIONS TO THE PROBLEMS

The present inventors have conducted diligent studies in view of solving the above problems, whereupon they have found that a sheet with a layered structure obtained by layering a resin layer including at least a foamed resin layer on a fibrous base material, in which the displacement from the first maximum point of the tensile strength in the width direction measured at a tensile speed of 3 mm/minute and at a distance between grippers of 800 mm in the testing method for tear strength of sheeting defined in JIS K7128-3 to the second maximum point thereof is 1 to 5 mm, is capable of suppressing breakage in an earthquake-resistant structure even subjected to an assumed shake, and has breakage resistance required for a sheet for covering the wall of an earthquake-resistant structure, which is to be pasted to a backing board for interior finishing of an earthquake-resistant structure. The present invention has been completed by further researches on the basis of such findings.

The above aims are achieved by invention as defined in the appended claims.

### ADVANTAGES OF THE INVENTION

The sheet for covering the wall of an earthquake-resistant structure used according to the present invention is capable of suppressing breakage caused by an earthquake, even when a shake caused by an earthquake occurs and some positional displacement of backing occurs at a backing board for interior finishing of an earthquake-resistant structure, because the sheet has a tear strength following the positional displacement of backing.

Moreover, according to the screening method of the present invention, since a sheet for covering the wall of an earthquake-resistant structure which is less liable to break even when a shake caused by an earthquake occurs can be selected, it is made possible to choose one suitable for the application to an earthquake-resistant structure among a wide variety of conventionally known wallpaper.

Furthermore, according to the covering method of the present invention, it is possible to provide an earthquake-resistant structure provided with interior finishing which is less liable to break and is capable of maintaining the esthetic appearance even when a shake caused by an earthquake occurs.

### BRIEF DESCRIPTION OF THE DRAWINGS

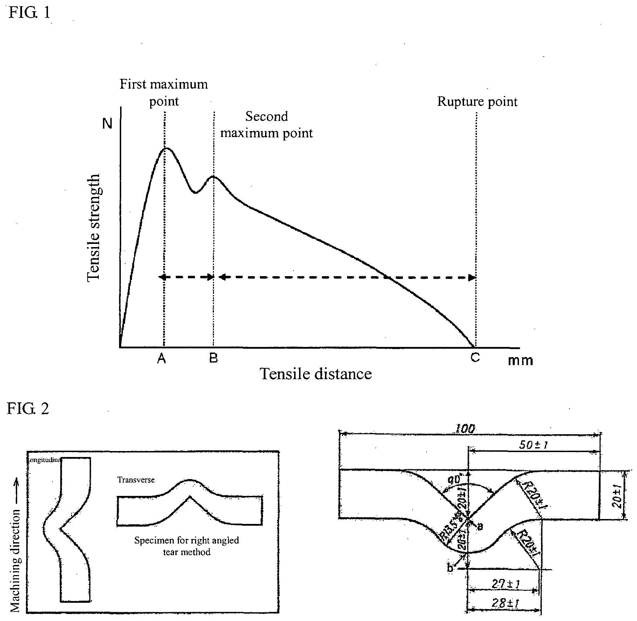

Fig. 1 shows an example of a chart (the horizontal axis: tensile distance, the vertical axis: tensile strength) obtained in the case where a layered sheet obtained by layering a foamed resin layer on a fibrous base material is subjected to the testing method for tear strength of sheeting defined in JIS K7128-3.
Fig. 2 is a figure showing a sampling direction of a specimen to be subjected to the testing method for tear strength of sheeting defined in JIS K7128-3 (the figure on the left) and the shape of a specimen (the figure on the right). In this connection, the unit of numerical values showing the dimensions of the shape of a specimen shown in the figure on the right is "mm".

### EMBODIMENTS OF THE INVENTION

### 1. Sheet for covering the wall of earthquake-resistant structure

The sheet for covering the wall of an earthquake-resistant structure used according to the present invention is a sheet for covering the wall of an earthquake-resistant structure, which is to be pasted to a backing board for interior finishing of an earthquake-resistant structure, the sheet being a layered structure obtained by layering a resin layer including at least a foamed resin layer on a fibrous base material, and the displacement from the first maximum point of the tensile strength in the width direction of the sheet measured at a tensile speed of 3 mm/minute and at a distance between grippers of 800 mm in the testing method for tear strength of sheeting defined in JIS K7128-3 to the second maximum point thereof being 1 to 5 mm. Hereinafter, the sheet for covering the wall of an earthquake-resistant structure used according to the present invention will be described in detail.

### Tear strength

With regard to the sheet for covering the wall of an earthquake-resistant structure used according to the present invention, the displacement from the first maximum point of the tensile strength in the width direction measured at a tensile speed of 3 mm/minute and at a distance between grippers of 800 mm in the testing method for tear strength of sheeting defined in IS K7128-3 to the second maximum point thereof is 1 to 5 mm. By allowing the sheet to satisfy such tear strength, in the case of being applied as the wallpaper for interior finishing of an earthquake-resistant structure, the wallpaper can follow the positional displacement of a backing board even when subjected to a shake caused by an earthquake and it is made possible to suppress breakage of the wallpaper. From the viewpoint of further effectively suppressing breakage of wallpaper when subjected to a shake caused by an earthquake, the displacement is preferably 1.5 to 5 mm, further preferably 1.6 to 4.2 mm.

In this connection, in the testing method for tear strength, the tensile strength in the width direction refers to the tensile strength in the width direction (namely, widthwise tensile) of a fibrous base material used as a base material. The width direction of the fibrous base material refers to the direction perpendicular to the fiber arrangement direction of the fibrous base material, and it can be determined by visual observation or measuring the underwater elongation (the underwater elongation in the width direction is larger than that in the longitudinal direction).

Moreover, the displacement from the first maximum point of the tensile strength in the width direction to the second maximum point thereof refers to the distance from the point of tensile distance at which firstly the tensile strength shows the maximum value (the first maximum point) to the point of tensile distance at which secondly the tensile strength shows the maximum value (the second maximum point) in the figure obtained when the testing method for tear strength is performed and the tensile distance and tensile strength are taken as the horizontal axis and vertical axis to be plotted. The first maximum point refers to the point at which rupture of the fibrous base material starts and the second maximum point refers to the point at which rupture of the resin layer starts. For example, when a foamed layered sheet obtained by layering a foamed resin layer on the fibrous base material is subjected to the testing method for tear strength, such a chart (the horizontal axis: tensile distance, the vertical axis: tensile strength) shown in Figure 1 is obtained and the distance from A (the rupture starting point of the fibrous base material) to B (the rupture starting point of the resin layer) shown in Figure 1 corresponds to the displacement from the first maximum point to the second maximum point. In this connection, in Figure 1, Point C represents the rupture point at which the foamed layered sheet is completely ruptured.

In this connection, the testing method for tear strength is performed by cutting the foamed layered sheet into a shape defined in JIS K7128-3 shown in Figure 2. Moreover, specifically, the testing method for tear strength of sheeting defined in JIS K7128-3 is performed under the conditions described in the section of Examples mentioned below.

A layered sheet that has the above-mentioned tear strength is prepared by appropriately adjusting the composition, the thickness and the like of each layer configuring the layered sheet.

### Layered structure

The sheet for covering the wall of an earthquake-resistant structure used according to the present invention has a layered structure obtained by layering a resin layer including at least a foamed resin layer on a fibrous base material.

In the sheet for covering the wall of an earthquake-resistant structure used according to the present invention, the resin layer needs only to include at least a foamed resin layer and may be a layered structure having one or a plurality of layers other than the foamed resin layer as long as it has the above-mentioned tear strength.

For example, in order to enhance the adhesiveness of the resin layer to the fibrous base material, as necessary, a non-foamed resin layer B may be formed between the base material and the foamed resin layer.

Moreover, on the upper surface of the foamed resin layer (the face opposite to the fibrous base material), for the purpose of imparting designability to the sheet for covering the wall of an earthquake-resistant structure, a picture pattern layer may be formed as necessary. Furthermore, for the purpose of vivifying the picture pattern or enhancing the scratch resistance of the foamed resin layer, as necessary, a non-foamed resin layer A may be formed on the upper surface of the foamed resin layer (the face opposite to the fibrous base material) or between the foamed resin layer and the picture pattern layer in the case where the picture pattern layer is formed.

Moreover, in the case where the picture pattern layer is formed, in view of imparting stain resistance, the control of the luster on the surface of the picture pattern layer, the protection of the picture pattern layer and the like, a surface protective layer may be provided on the upper surface of the picture pattern layer.

In this way, the sheet for covering the wall of an earthquake-resistant structure used according to the present invention may include at least one layer selected from the group consisting of the non-foamed resin layer B, the non-foamed resin layer A, the picture pattern layer and the surface protective layer, as resin layers, other than the formed resin layer, as necessary. That is, one example of the layered structure in the sheet for covering the wall of an earthquake-resistant structure according to the present invention includes a layered structure having a stack of fibrous base material/non-foamed resin layer B provided as necessary/formed resin layer/non-foamed resin layer A provided as necessary/picture pattern layer provided as necessary/surface protective layer provided as necessary in this order. In particular, a suitable example of the layered structure in the sheet for covering the wall of an earthquake-resistant structure used according to the present invention includes a layered structure having a stack of fibrous base material/non-foamed resin layer B/formed resin layer/non-foamed resin layer A/picture pattern layer/surface protective layer in this order.

Moreover, to the surface of the opposite side to the fibrous base material in the sheet for covering the wall of an earthquake-resistant structure, in order to impart designability, an uneven pattern by emboss processing may be applied.

Hereinafter, the composition of each layer configuring the sheet for covering the wall of an earthquake-resistant structure used according to the present invention and the forming method thereof will be described.

### [Fibrous base material]

As the fibrous base material used in the present invention, a material usually employed as a wallpaper base may be used. Moreover, in the fibrous base material, a flame retardant, an inorganic agent, a dry paper strengthening agent, a wet paper strengthening agent, a coloring agent, a sizing agent, a fixing agent, and the like may be contained as necessary. Specifically, examples of the fibrous base material include a general wallpaper base (one prepared by subjecting a sheet made mainly of pulp to a sizing treatment with a sizing agent), a flame-resistant paper (one prepared by treating a sheet made mainly of pulp with a flame retardant such as guanidine sulfamate or guanidine phosphate); an inorganic paper containing an inorganic additive such as aluminum hydroxide or magnesium hydroxide; a fine quality paper; a thin paper, and a fiber mixed paper (one prepared by mixing a synthetic fiber and pulp and subjecting the mixture to papermaking). In this connection, one corresponding to a nonwoven fabric when classified is also included in the fibrous base material used in the present invention.

Although the basis weight of the fibrous base material is not particularly restricted, it is for example about 50 to 300 g/m², preferably about 50 to 120 g/m².

### [Resin layer]

The resin layer is provided on the upper surface of the fibrous base material and is a layer including at least the foamed resin layer. The resin layer may be a single layer structure made of the foamed resin layer alone, and moreover, it may be a layered structure including at least one layer selected from the group consisting of the non-foamed resin layer B, the non-foamed resin layer A, the picture pattern layer and the surface protective layer, other than the formed resin layer.

Although the mass per unit area of the resin layer and the density of each layer configuring the resin layer are appropriately set according to the kind of a resin component to be used, the number of layers other than the formed resin layer and the like, from the viewpoint of allowing the sheet to satisfy the previously described tear strength, it is desirable that the mass per unit area of the resin layer be 70 to 110 g/m², preferably 72 to 100 g/m², and that the density of the foamed resin layer included in the resin layer be 0.1 to 0.3 g/cm³, preferably 0.12 to 0.28 g/cm³.

Although the thickness of the resin layer may be appropriately set within such a range that the sheet is allowed to satisfy the previously described tear strength according to the kind of a resin component to be used, the number of layers other than the formed resin layer and the like, the thickness is for example 70 to 700 µm, preferably 300 to 600 µm.

### (Foamed resin layer)

The formed resin layer is an essential layer included in the resin layer and is formed by allowing a foaming agent-containing resin layer containing a resin component and a foaming agent to foam. The resin component used for the foamed resin layer is not particularly restricted as long as the sheet for covering the wall of an earthquake-resistant structure used according to the present invention can satisfy the previously described tear strength. From the viewpoint of allowing the sheet to satisfy the previously described tear strength, it is preferred that the foamed resin layer contain, as a resin component, at least one of 1) polyethylene and 2) an ethylene copolymer in which ethylene and a component other than α-olefin are employed as monomers (hereinafter, abbreviated as "ethylene copolymer").

Polyethylene used as the resin component of the foamed resin layer may be a homopolymer of ethylene or may be a copolymer of ethylene and α-olefin. Although the α-olefin used as a co-monomer of the copolymer is appropriately set according to the density to be imparted to the polyolefin and the like, examples thereof include a linear or branched α-olefin with 3 to 20, preferably 3 to 8 carbon atoms.

Examples of the polyethylene include high density polyethylene (HDPE) with a density of not less than 0.942 g/cm³, medium density polyethylene (MDPE) with a density of not less than 0.93 g/cm³ and less than 0.942 g/cm³, low density polyethylene (LDPE) with a density of not less than 0.91 g/cm³ and less than 0.93 g/cm³, and linear low density polyethylene (LLDPE) with a density of not less than 0.85 g/cm³ and less than 0.93 g/cm³. Among them, from the viewpoint of allowing the sheet to satisfy the previously described tear strength, low density polyethylene and linear low density polyethylene are preferred. These polyethylenes may be used alone and may be used in combination of two or more thereof.

Examples of a monomer (co-monomer) other than α-olefin configuring the ethylene copolymer include vinyl carboxylate, unsaturated carboxylic acid, and unsaturated carboxylic acid ester. Specifically, examples of the vinyl carboxylate include vinyl acetate. Specifically, examples of the unsaturated carboxylic acid include acrylic acid and methacrylic acid. Specifically, examples of the unsaturated carboxylic acid ester include methyl acrylate and methyl methacrylate.

Among these co-monomers, from the viewpoint of allowing the sheet to satisfy the previously described tear strength, vinyl carboxylate is preferred and vinyl acetate is further preferred.

Examples of the ethylene copolymer used as the resin component of the foamed resin layer include an ethylene-vinyl carboxylate copolymer, an ethylene-unsaturated carboxylic acid copolymer, and an ethylene-unsaturated carboxylic acid ester copolymer. Specific examples thereof include an ethylene-vinyl acetate copolymer (EVA), an ethylene-methyl methacrylate copolymer (EMMA), an ethylene-ethyl acrylate copolymer (EEA), an ethylene-methyl acrylate copolymer (EMA), and an ethylene-(meth)acrylic acid copolymer (EMAA). In the present specification, "(meth)acrylic acid" means acrylic acid or methacrylic acid. These ethylene copolymers may be used alone or may be used in combination of two or more thereof.

Moreover, in the ethylene copolymer, although the ratio of ethylene to the co-monomer is not particularly restricted, for example, the content of the co-monomer is usually 5 to 42% by mass, preferably 5 to 35% by mass per total mass of the ethylene copolymer.

As the resin component of the foamed resin layer, from the viewpoint of allowing the sheet for covering the wall of an earthquake-resistant structure used according to the present invention to satisfy the previously described tear strength, at least one of polyethylene, an ethylene-vinyl carboxylate copolymer, an ethylene-unsaturated carboxylic acid copolymer and an ethylene-unsaturated carboxylic acid ester copolymer is preferred; and at least one of polyethylene, an ethylene-vinyl acetate copolymer, an ethylene-methyl methacrylate copolymer and an ethylene-(meth)acrylic acid copolymer is further preferred. Above all, it is preferred to contain at least polyethylene as the resin component of the foamed resin layer.

From the viewpoint of allowing the sheet for covering the wall of an earthquake-resistant structure used according to the present invention to satisfy the previously described tear strength, examples of a suitable embodiment of the resin component forming the foamed resin layer include a combination of low density polyethylene and linear low density polyethylene. Moreover, examples of another suitable embodiment of the resin component forming the foamed resin layer include a combination of polyethylene and at least one of an ethylene-vinyl acetate copolymer, an ethylene-methyl methacrylate copolymer, an ethylene-(meth)acrylic acid copolymer and an ethylene-α-olefin copolymer (hereinafter, abbreviated as "resin component other than polyethylene"); and especially preferably include a combination of linear low density polyethylene and an ethylene-vinyl acetate copolymer.

In the case where the combination of low density polyethylene and linear low density polyethylene is employed as the resin component, although these ratios are not particularly restricted, from the viewpoint of allowing the sheet to satisfy the previously described tear strength, the content of linear low density polyethylene is 1 to 50 parts by mass, preferably 20 to 35 parts by mass, per 100 parts by mass of the total amount of low density polyethylene and linear low density polyethylene. Moreover, in the case where the combination of polyethylene and a resin component other than polyethylene is employed as the resin component, although these ratios are not particularly restricted, from the viewpoint of allowing the sheet to satisfy the previously described tear strength, the content of the resin component other than polyethylene is 1 to 50 parts by mass, preferably 10 to 30 parts by mass, per 100 parts by mass of the total amount of polyethylene and the resin component other than polyethylene.

Although the content of the resin component in the foamed resin layer is appropriately set in view of the kind and the combination of resin components to be used, from the viewpoint of allowing the sheet to satisfy the previously described tear strength, the total content of the resin components is usually 50 to 80% by mass, preferably 55 to 70% by mass, relative to the total mass of the foamed resin layer.

The foaming agent used for the foamed resin layer is not particularly restricted and can be selected from known foaming agents. Examples thereof include organic decomposable foaming agents such as azo-based agents including azodicarbonamide (ADCA) and azobisformamide; and hydrazide-based agents including oxybenzenesulfonyl hydrazide (OBSH) and p-toluenesulfonyl hydrazide; a microcapsule type foaming agent; and an inorganic foaming agent such as sodium bicarbonate. These foaming agents may be used alone or may be used in combination of two or more thereof.

The content of the foaming agent can be appropriately set according to the kind of the foaming agent, the expansion ratio and the like. From the viewpoint of the expansion ratio, it is set to 7 times or more, preferably about 7 to 10 times, and for example, the content of the foaming agent may be set to about 1 to 20 parts by mass relative to 100 parts by mass of the resin component.

In the foamed resin layer, in order to enhance the foaming effect of the foaming agent, a foaming auxiliary agent may be contained as necessary. Although the foaming auxiliary agent is not particularly restricted, examples thereof include a metal oxide and a fatty acid metal salt. Further specifically, examples thereof include zinc stearate, calcium stearate, magnesium stearate, zinc octoate, calcium octoate, magnesium octoate, zinc laurate, calcium laurate, magnesium laurate, zinc oxide, and magnesium oxide. These foaming auxiliaries may be used alone or may be used in combination of two or more thereof. Although the content of these foaming auxiliaries can be appropriately set according to the kinds of the foaming auxiliaries, the kind of the foaming agent and the content thereof, and the like, the content is for example about 0.3 to 10 parts by mass, preferably about 1 to 5 parts by mass, relative to 100 parts by mass of the resin component.

Moreover, in the foamed resin layer, in view of imparting flame retardance, gap control, enhancing the surface characteristics and the like, an inorganic filler may be contained as necessary. Although the inorganic filler is not particularly restricted, examples thereof include calcium carbonate, aluminum hydroxide, magnesium hydroxide, antimony trioxide, zinc borate, and a molybdenum compound. These inorganic fillers may be used alone or may be used in combination of two or more thereof.

Moreover, in the foamed resin layer, a pigment may be contained as necessary. The pigment is not particularly restricted and either of an inorganic pigment and an organic pigment is acceptable. Examples of the inorganic pigment include titanium oxide, zinc flower, carbon black, black iron oxide, yellow iron oxide, chrome yellow, molybdenum orange, cadmium yellow, nickel titanium yellow, chromium titanium yellow, iron oxide (red iron oxide), cadmium red, ultramarine blue, Prussian blue, cobalt blue, chromium oxide, cobalt green, aluminum powder, bronze powder, titanated mica, and zinc sulfide. Examples of the organic pigment include aniline black, perylene black, azo-based pigments (azo lake, insoluble azo, condensed azo), and polycyclic pigments (isoindolinone, isoindoline, quinophthalone, perinone, flavanthrone, anthrapyrimidine, anthraquinone, quinacridone, perylene, diketopyrrolopyrrole, dibromo anthanthrone, dioxazine, thioindigo, phthalocyanine, indanthrone, halogenated phthalocyanine). These pigments may be used alone or may be used in combination of two or more thereof.

Since there is a tendency that the foamed resin layer is liable to be brittle and the sheet satisfies the previously described tear strength with difficulty as the content of the inorganic filler and/or pigment increases, the content of the inorganic filler and/or pigment is appropriately set within such a range that the sheet can satisfy the previously described tear strength. Specifically, with regard to the content of the inorganic filler and/or pigment, the total amount thereof is about 0 to 80 parts by mass, preferably about 10 to 70 parts by mass, relative to 100 parts by mass of the resin component.

Furthermore, in the foamed resin layer, as long as the sheet can satisfy the previously described tear strength, additives such as an oxidation inhibitor, a crosslinking agent, a crosslinking auxiliary agent, and a surface treatment agent may be contained as necessary.

In order to allow the sheet for covering the wall of an earthquake-resistant structure used according to the present invention to have the previously described tear strength, the foamed resin layer may be crosslinked as necessary. In order to crosslink the foamed resin layer, for example, it needs only to allow a foaming agent-containing resin layer before foaming to be previously subjected to a crosslinking treatment and then allow the foaming agent-containing resin layer to foam. Examples of a method of the crosslinking treatment include electron beam crosslinking and chemical crosslinking. The condition under which the electron beam crosslinking is performed is specifically exemplified by a method of setting the acceleration voltage to 100 to 300 kV, preferably 100 to 200 kV, and setting the irradiation amount to 10 to 100 kGy, preferably 30 to 60 kGy, thereby performing an electron beam irradiation treatment. Moreover, the condition under which the chemical crosslinking is performed is specifically exemplified by a method of allowing an organic peroxide such as dicumyl peroxide to be contained in the foaming agent-containing resin layer, thereby performing a heat treatment for 5 to 10 minutes as the heating time at a temperature of about 160 to 180°C.

Although the thickness of the foamed resin layer may be appropriately set within such a range that the sheet can satisfy the previously described tear strength, the thickness is for example 300 to 700 µm. The thickness before foaming of the foamed resin layer (namely, the thickness of the foaming agent-containing resin layer) is for example 40 to 100 µm.

With regard to the foamed resin layer, although the forming method is not particularly restricted, the method is preferably a method of forming the layer by melt-molding, further preferably a method of extruding it by a T-die extruder to form the layer.

### (Foamed resin layer B (Adhesive resin layer))

The non-foamed resin layer B is an adhesive resin layer formed on the lower surface of the formed resin layer (the face to be brought into contact with the fibrous base material) as necessary, for the purpose of enhancing the adhesive force between the fibrous base material and the formed resin layer, as the layer configuring the resin layer.

The resin component of the non-foamed resin layer B is not particularly limited and examples thereof include a polyolefin-based resin, a methacryl-based resin, a thermoplastic polyester-based resin, a polyvinyl alcohol-based resin, and a fluorine-based resin. From the viewpoint of allowing the sheet to satisfy the previously described tear strength, the resin component is preferably a polyolefin-based resin, further preferably an ethylene-vinyl acetate copolymer (EVA). As the ethylene-vinyl acetate copolymer, known or commercially available one may be used. In the ethylene-vinyl acetate copolymer used for the non-foamed resin layer B, although the ratio of the vinyl acetate component (VA component) is not particularly restricted, the ratio is for example 10 to 46% by mass, preferably 15 to 41% by mass.

Although the thickness of the non-foamed resin layer B is not particularly restricted, the thickness is for example about 3 to 50 µm, preferably about 3 to 20 µm.

Although the forming method of the non-foamed resin layer B is not particularly restricted, for example, the method is preferably a method of forming the layer by melt-molding, further preferably a method of extruding it by a T-die extruder to form the layer. It is especially desirable to use a multi-manifold type T-die with which simultaneous film formation of two or more layers is possible by simultaneously extruding molten resins, simultaneously extruding the foamed resin layer and the non-foamed resin layer B for forming.

### (Non-foamed resin layer A)

The non-foamed resin layer A is a layer formed on the upper surface of the foamed resin layer (the face opposite to the fibrous base material) as necessary, for the purpose of vivifying a picture pattern observed when the picture pattern layer is formed or enhancing the scratch resistance of the foamed resin layer, as the layer configuring the resin layer.

Although the resin component of the non-foamed resin layer A is not particularly restricted, examples thereof include a polyolefin-based resin, a methacryl-based resin, a thermoplastic polyester-based resin, a polyvinyl alcohol-based resin, and a fluorine-based resin. These resin components may be used alone or may be used in combination of two or more thereof. Among these resin components, a polyolefin-based resin is preferred.

Specifically, examples of the polyolefin-based resin include polyethylene, polypropylene, polybutene, polybutadiene, polyisoprene, an ethylene-methyl acrylate copolymer, an ethylene-ethyl acrylate copolymer, an ethylene-(meth)acrylic acid copolymer, an ethylene-vinyl acetate copolymer, a saponified product of an ethylene-vinyl acetate copolymer, and an ionomer. Among them, from the viewpoint of allowing the sheet to satisfy the previously described tear strength, polyethylene and an ethylene-methyl acrylate copolymer are preferred, and low density polyethylene and an ethylene-methyl acrylate copolymer are further preferred.

Although the thickness of the non-foamed resin layer A is not particularly restricted, the thickness is for example about 3 to 50 µm, preferably about 3 to 20 µm.

Although the forming method of the non-foamed resin layer A is not particularly restricted, the method is preferably a method of forming the layer by melt-molding, further preferably a method of extruding it by a T-die extruder to form the layer. It is especially desirable to use a multi-manifold type T-die to simultaneously extrude the foamed resin layer and the non-foamed resin layer B for forming. Moreover, in the case where three layers of the non-foamed resin layer A, the foamed resin layer and the non-foamed resin layer B are provided, it is desirable to use a multi-manifold type T-die with which simultaneous film formation of three layers is possible, simultaneously extruding these three layers for forming.

### [Picture pattern layer]

The picture pattern layer is a layer formed on the upper surface of the foamed resin layer (or the non-foamed resin layer A) as necessary, for the purpose of imparting designability to the sheet for covering the wall of an earthquake-resistant structure, as the layer configuring the resin layer.

Examples of the picture pattern include a woodgrain pattern, a marble grain pattern, a pebbly pattern, a tiled pattern, a brick-masonry pattern, a cloth pattern, a tie-dyed leather pattern, a geometric figure, a letter, a symbol, and an abstraction pattern. The picture pattern can be appropriately selected according to the use of a foamed layered sheet.

For example, the picture pattern layer can be formed by printing the picture pattern. Examples of the printing method include gravure printing, flexographic printing, silk screen printing, and offset printing. As the printing ink, a printing ink containing a coloring agent, a binding material resin, a solvent (or a dispersing medium), and the like can be used. As these inks, known or commercially available ones may be used.

Although the coloring agent is not particularly restricted, for example, such a pigment used for the previously mentioned foamed resin layer may be appropriately used.

The binding material resin needs only to be appropriately set according to the kind of a base material sheet and examples thereof include an acryl-based resin, a styrene-based resin, a polyester-based resin, a urethane-based resin, a chlorinated polyolefin-based resin, a vinyl chloride-vinyl acetate copolymer-based resin, a polyvinyl butyral resin, an alkyd-based resin, a petroleum-based resin, a ketone resin, an epoxy-based resin, a melamine-based resin, a fluorine-based resin, a silicone-based resin, a cellulose derivative, and a rubber-based resin. These binding material resins may be used alone or may be used in combination of two or more thereof.

Although the solvent (or the dispersing medium) is not particularly restricted, examples thereof include petroleum-based organic solvents such as hexane, heptane, octane, toluene, xylene, ethylbenzene, cyclohexane and methylcyclohexane; ester-based organic solvents such as ethyl acetate, butyl acetate, 2-methoxyethyl acetate and 2-ethoxyethyl acetate; alcohol-based organic solvents such as methyl alcohol, ethyl alcohol, normal propyl alcohol, isopropyl alcohol, isobutyl alcohol, ethylene glycol and propylene glycol; ketone-based organic solvents such as acetone, methyl ethyl ketone, methyl isobutyl ketone and cyclohexanone; ether-based organic solvents such as diethyl ether, dioxane and tetrahydrofuran; chlorine-based organic solvents such as dichloromethane, carbon tetrachloride, trichloroethylene and tetrachloroethylene; and water. These solvents (or dispersing media) may be used alone or may be used in combination of two or more thereof.

Although the thickness of the picture pattern layer can be appropriately set according to the kind of the picture pattern and the like, the thickness is for example about 0.1 to 10 µm.

### [Surface protective layer]

The surface protective layer is a layer formed on the upper surface of the picture pattern layer, as necessary, in the case where the picture pattern layer is formed, in view of imparting stain resistance, the control of the luster on the surface of the picture pattern layer, the protection of the picture pattern layer, and the like, as the layer configuring the resin layer.

With regard to the resin component used for the formation of the surface protective layer, such a resin component allowing the sheet to satisfy the previously described tear strength may be appropriately selected from known resin components such as a thermoplastic resin and a curable resin.

Examples of the thermoplastic resin used for the formation of the surface protective layer include a polyolefin resin, an acryl-based resin, a polyvinyl alcohol-based resin, and a fluorine-based resin. Among these thermoplastic resins, from the viewpoint of effectively allowing the sheet to satisfy the previously described tear strength, an ethylene-(meth)acrylic acid-based copolymer resin such as an ethylene-acrylic acid copolymer resin, an ethylene-methyl acrylate copolymer resin, an ethylene-ethyl acrylate copolymer resin and an ethylene-methacrylic acid copolymer resin, an ethylene-vinyl acetate copolymer (EVA), a saponified product of an ethylene-vinyl acetate copolymer resin, an ionomer, and polyolefin resins such as ethylene copolymers including ethylene-α-olefin copolymers are preferred. These thermoplastic resins may be used alone or may be used in combination of two or more thereof. Moreover, in the case where a crosslinkable thermoplastic resin such as an ethylene copolymer is used for the formation of the surface protective layer, the thermoplastic resin may be subjected to a crosslinking treatment as necessary.

Moreover, with regard to the curable resin used for the formation of the surface protective layer, the type of the curing reaction is not particularly restricted as long as the sheet can satisfy the previously described tear strength, and for example, any one of an ordinary temperature-curable resin, a thermosetting resin, an ionizing radiation curable resin, a one-pack type curable resin, a two-pack type curable resin, an ionizing radiation curable resin and the like is acceptable, and a one-pack type curable resin is preferred. As the curable resin, from the viewpoint of effectively allowing the sheet to satisfy the previously described tear strength, an acryl-based resin, a urethane-based resin, and the like are preferred, and a one-pack type curable acryl-based resin is further preferred. These curable resins may be used alone or may be used in combination of two or more thereof. Moreover, in the case where the curable resin is used for the formation of the surface protective layer, in order to promote the curing reaction, a crosslinking agent, a polymerization initiator, a polymerization accelerator, and the like may be used as necessary.

Moreover, the surface protective layer may be a layer made of a single layer and may be a layer in which two or more layers which are the same or different are layered. For example, the structure of the layer may be a double layered structure in which a layer formed from a cured resin is formed as the outermost layer and a layer formed from the thermoplastic resin is layered as the lower layer thereof.

Although the thickness of the surface protective layer is not particularly restricted, the thickness is for example 1 to 10 µm, preferably 1 to 5 µm.

With regard to the formation of the surface protective layer, a method corresponding to the kind of the resin component to be used may be employed. For example, in the case of forming the surface protective layer using the thermoplastic resin, the formation may be performed by applying a thermoplastic resin film previously formed on the surface of the picture pattern layer or may be performed by allowing the thermoplastic resin to be formed into a film on the surface of the picture pattern layer. Moreover, in the case of forming the surface protective layer using the curable resin, the formation is performed by applying a resin composition prepared by mixing the thermosetting resin and various additives as necessary to the foamed resin layer (or the non-foamed resin layer A or the picture pattern layer) by a method such as gravure coating, bar coating, roll coating, reverse roll coating and comma coating, and then drying and curing the resin composition by heating and the like as necessary.

### [Uneven pattern]

To the surface (the surface of the opposite side to the fibrous base material) of the sheet for covering the wall of an earthquake-resistant structure used according to the invention, in order to impart designability, an uneven pattern by emboss processing may be applied as necessary. The emboss processing may be performed by a known means such as the action of pressing with an embossed plate. The uneven pattern is not particularly restricted and examples thereof include woodgrain vessel channel, stone board surface unevenness, cloth surface texture, satin finished surface, grain, hairline, and linear streak.

### [Pasting object]

The sheet for covering the wall of an earthquake-resistant structure used according to the invention is used as wallpaper which is to be pasted to a backing board for interior finishing of an earthquake-resistant structure. In the present invention, "the earthquake-resistant structure" refers to a structure which has such a strength that is capable of resisting an earthquake and is designed so that the structure does not eliminate the shake caused by an earthquake and rather oscillates actively to absorb the earthquake vibration, and it is distinguished from the vibration control structure and the base isolation structure.

The backing board for interior finishing of an earthquake-resistant structure which is a pasting object of the sheet for covering the wall of an earthquake-resistant structure according to the invention is not particularly restricted, and the board may be a backing board used as a face material bearing wall or may be a backing board for interior finishing of a structure which is imparted with earthquake resistance by a bearing wall employing a brace. In general, since there is a tendency that in the earthquake-resistant structure using a face material bearing wall, compared to the earthquake-resistant structure using a bearing wall employing a brace, the positional displacement is liable to occur at the joint part of the face material bearing wall by an earthquake, the face material bearing wall is a suitable pasting object of the sheet for covering the wall of an earthquake-resistant structure according to the invention.

Although the kind of the material of the backing board for interior finishing as the pasting object of the sheet for covering the wall of an earthquake-resistant structure used according to the invention is also not particularly restricted, the material is for example a gypsum board, plywood, or the like.

Moreover, the procedure for pasting the sheet for covering the wall of an earthquake-resistant structure according to the invention to the backing board for interior finishing can be performed under the same conditions as those in the conventional pasting method of wallpaper using an adhesive such as a starch-based paste agent.

Moreover, with regard to the sheet for covering the wall of an earthquake-resistant structure used according to the present invention, although breakage of wallpaper caused by an earthquake is especially liable to be generated at the joint part of the backing board for interior finishing, according to the sheet for covering the wall of an earthquake-resistant structure used in the present invention, even at such a joint part, breakage of wallpaper caused by an earthquake can be effectively suppressed.

### Production method of sheet for covering the wall of earthquake-resistant structure

Although the sheet for covering the wall of an earthquake-resistant structure used according to the present invention is produced by appropriately adjusting the composition and thickness of each layer and the layered structure so that the sheet can satisfy the previously described tear strength, examples of the production procedure thereof will be described below. Provided that the production method of the sheet for covering the wall of an earthquake-resistant structure according to the present invention should not be construed as being limited to the contents mentioned below. In this connection, in the following description of the production method, with regard to the forming method of each layer configuring the sheet for covering the wall of an earthquake-resistant structure, the contents already described in the section of "1. Foamed layered sheet" will be omitted.

First, a resin layer including at least a foaming agent-containing resin layer is layered on a fibrous base material. In the case where a non-foamed resin layer A and/or a non-foamed resin layer B are provided as the resin layer, it is desirable to simultaneously extrude the non-foamed resin layer A, the foaming agent-containing resin layer and the non-foamed resin layer B using a multi-manifold type T-die for forming.

Although the cylinder temperature and the die temperature on subjecting the foaming agent-containing resin layer to extrusion forming with a T-die extruder may be appropriately set according to the kind of resin components to be used and the like, these temperatures are generally about 100 to 140°C.

Then, as the resin layer, a surface protective layer is layered with a picture pattern layer interposed as necessary. In the formation of the surface protective layer, in the case where a curable resin is used, a heat treatment, a crosslinking treatment, and the like are performed according to the type of the curing reaction of the resin to cure the curable resin. Moreover, in the case where a crosslinkable thermoplastic resin such as an ethylene copolymer is used in the surface protective layer, the thermoplastic resin may also be subjected to a crosslinking treatment as necessary.

Thus, a layered sheet in which the resin layer is layered on the fibrous base material is prepared. The resin layer is formed into a layered structure having a stack of non-foamed resin layer B provided as necessary/formed resin layer/non-foamed resin layer A provided as necessary/picture pattern layer provided as necessary/surface protective layer provided as necessary in this order.

Afterward, the sheet for covering the wall of an earthquake-resistant structure used according to the present invention is produced by allowing the foaming agent-containing resin layer in the resin layer of the obtained layered sheet to foam.

Although the heating condition on allowing the foaming agent-containing resin layer to foam is not particularly restricted, for example, the heating temperature is about 210 to 240°C and the heating period is about 20 to 80 seconds.

Before allowing the foaming agent-containing resin layer to foam, in order to adjust the melt tension of the foaming agent-containing resin layer and readily attain a desired expansion ratio, the foaming agent-containing resin layer may be subjected to a crosslinking treatment as necessary. As previously described, in the case where the surface protective layer is provided and the surface protective layer is subjected to a crosslinking treatment, crosslinking for the foaming agent-containing resin layer and crosslinking for the surface protective layer may be simultaneously performed.

Moreover, the sheet for covering the wall of an earthquake-resistant structure used according to the present invention may be subjected to emboss processing to shape the sheet and form an uneven pattern on the surface thereof. The emboss processing may be performed by a known means such as an embossed plate. Specifically, by bringing the foamed resin layer and the surface protective layer provided as necessary to a state of being heated and softened, and then pressing with an embossed plate, the sheet can be shaped and a desired emboss pattern can be formed thereon.

### 2. Method for screening sheet for covering the wall of earthquake-resistant structure

The method for screening (selecting) the sheet for covering the wall of an earthquake-resistant structure according to the present invention comprises Step 1 of measuring the tear strength and Step 2 of selecting a candidate sheet exhibiting specific tear strength. Hereinafter, the screening method according to the present invention will be described in detail.

In the screening method according to the present invention, a layered sheet in which a resin layer including at least a foamed resin layer is layered on a fibrous base material is used as a candidate sheet. In this context, the candidate sheet refers to a sheet to be tested which is subjected to the screening method according to the present invention in order to determine the appropriateness of a sheet as the sheet for covering the wall of an earthquake-resistant structure. The structure of the candidate sheet is not particularly restricted as long as the sheet has a layered structure in which a resin layer including at least a foamed resin layer is layered on a fibrous base material.

In the screening method according to the present invention, first, the displacement from the first maximum point of the tensile strength in the width direction of the candidate sheet to the second maximum point thereof at a tensile speed of 3 mm/minute and at a distance between grippers of 800 mm in the testing method for tear resistance of sheeting defined in JIS K7128-3 is measured (Step 1). The measuring conditions for the displacement are as described in the section of "1. Sheet for covering the wall of earthquake-resistant structure".

Then, on the basis of the measurement result of Step 1, a candidate sheet in which the displacement is 1 to 5 mm is selected as a sheet for covering the wall of an earthquake-resistant structure (Step 2). The candidate sheet thus selected is utilized as a sheet for covering the wall of an earthquake-resistant structure which is to be pasted to a backing board for interior finishing of an earthquake-resistant structure. The pasting object of the sheet for covering the wall of an earthquake-resistant structure is as described in the section of" 1. Sheet for covering the wall of earthquake-resistant structure".

### 3. Method for constructing sheet for covering the wall of earthquake-resistant structure

The method for constructing a sheet for covering the wall of an earthquake-resistant structure comprises Step I of selecting a layered sheet exhibiting predetermined tear strength and Step II of pasting the layered sheet selected in Step I to a backing board for interior finishing of an earthquake-resistant structure. Hereinafter, the construction method according to the present invention will be described in detail.

In the screening method according to the present invention, a layered sheet in which a resin layer including a foamed resin layer is layered on a fibrous base material is used as the candidate sheet. The candidate sheet is as described in the section of "2. Screening method for sheet for covering the wall of earthquake-resistant structure".

In the construction method according to the present invention, first, one in which the displacement from the first maximum point of the tensile strength in the width direction measured at a tensile speed of 3 mm/minute and at a distance between grippers of 800 mm in the testing method for tear strength of sheeting defined in JIS K7128-3 to the second maximum point thereof is 1 to 5 mm is selected from the candidate sheets (Step I). The measuring conditions for the displacement are as described in the section of "1. Sheet for covering the wall of earthquake-resistant structure".

Then, the layered sheet selected in Step I is pasted to a backing board for interior finishing of an earthquake-resistant structure (Step II). With regard to a method for pasting the layered sheet to a backing board for interior finishing of an earthquake-resistant structure, the procedure can be performed under the same conditions as those in the conventional construction method of wallpaper.

The wallpaper of an earthquake-resistant structure thus constructed is less liable to break even when a shake caused by an earthquake occurs, and is capable of maintaining the esthetic appearance.

### EXAMPLES

The present invention will be described below in detail with reference to examples and comparative examples. However, the present invention is not limited to the examples.

### [Test for tear strength]

By performing a test for tear strength of sheeting defined in JIS K7128-3, each foamed layered sheet obtained as above was measured for the displacement from the first maximum point of the tensile strength in the width direction to the second maximum point thereof. Specifically, the measurement was performed by the following procedure.

First, each foamed layered sheet was cut into a shape shown in Figure 2 and stored at a temperature of 23 ± 2°C and a relative humidity of 50 ± 5% for 88 hours or more. Then, with a TENSILON universal testing machine (manufactured by ORIENTEC Co., LTD., model number: RTC-1250A), the tensile speed and the distance between grippers were set to 3 mm/minute and 800 mm, respectively, and the test for tear strength was performed. The correlation between tensile distance and tensile strength was measured and the displacement from the first maximum point of the tensile strength in the width direction to the second maximum point thereof was determined. In this connection, the test for tear strength was performed in an environment of a temperature of 23 ± 2°C and a relative humidity of 50 ± 5%.

### [Production of layered sheet]

### Example 1

Using a T-die extruder for 3 kinds of 3 layers, the extrusion amounts were adjusted so that a stack of non-foamed resin layer A/foaming agent-containing resin layer/non-foamed resin layer B in this order had a thickness of 5µm/65µm/5µm, and a resin sheet (resin layer) with a three-layered structure was formed. With regard to the extrusion conditions, each of the cylinder temperatures was set to 120°C and each of the die temperatures was also set to 120°C. The foaming agent-containing resin layer in the resin sheet obtained remained in an unfoamed state. Both ends of the resin layer obtained were slit, providing a sheet with a width of 960 mm.

The non-foamed resin layer A, the foaming agent-containing resin layer and the non-foamed resin layer B were each formed using the following components.

The non-foamed resin layer A was formed from low density polyethylene ("Petrothene 208", produced by TOSOH CORPORATION).

The foaming agent-containing resin layer was formed from a resin prepared by kneading 80 parts by mass of low density polyethylene ("Petrothene 208", produced by TOSOH CORPORATION), 20 parts by weight of linear low density polyethylene ("LUMITAC 54-1", produced by TOSOH CORPORATION), 30 parts by mass of calcium carbonate ("Whiton H", produced by Shiraishi Kogyo Kaisha, Ltd.), 30 parts by mass of a coloring agent ("Ti-Pure R350", produced by Du Pont Kabushiki Kaisha), 5 parts by mass of a foaming agent ("VINYFOR AC#3", produced by EIWA CHEMICAL IND. CO., LTD.), 4 parts by mass of a foaming auxiliary agent ("ADK STAB OF-101 ", produced by ADEKA CORPORATION) and 1 part by mass of a crosslinking auxiliary agent ("OPSTAR JUA 702", produced by JSR Corporation).

The non-foamed resin layer B was formed from an ethylene-vinyl acetate copolymer (with a vinyl acetate content of 32% by mass; "Ultrathene 750", produced by TOSOH CORPORATION).

Then, a wallpaper sheet (WK-665, manufactured by KOHJIN Holdings Co., Ltd.), made of paper pulp, with a width of 970 mm was heated so that the sheet temperature was 120°C. The wallpaper sheet and the resin sheet were laminated together so that the non-foamed resin layer B of the resin sheet was brought into contact with the wallpaper sheet, were passed through a laminate roll, and were subjected to thermocompression bonding to obtain a layered body. In this case, they were laminated together by arranging the resin sheet at the center of the wallpaper sheet, and both end parts of 5 mm in overlap width of the wallpaper sheet were allowed to remain in a state of not being laminated with the resin sheet.

Afterward, by irradiating the resin sheet surface of the layered body obtained with an electron beam under the conditions of an acceleration voltage of 195 kV and an irradiation dose of 30 kGy, the foaming agent-containing resin layer in the resin sheet was subjected to a crosslinking treatment.

Then, the surface (non-foamed resin layer A) of the layered body was subjected to a corona discharge treatment, after which, with a gravure printing machine, using an aqueous ink ("Hydric", produced by Dainichiseika Color & Chemicals Mfg. Co., Ltd.) for pattern printing, a cloth pattern was printed to form a picture pattern layer. Afterward, with a gravure printing machine, on the picture pattern layer, an aqueous ink (ALTOP-402B, produced by Dainichiseika Color & Chemicals Mfg. Co., Ltd., acryl-based one-pack curing type resin) was printed to form a surface protective layer.

Next, the layered body obtained was heated (at 220°C for 35 seconds) in an oven to allow the foaming agent-containing resin layer to foam, forming a foamed resin layer. Afterward, by pressing a metal roll having a woven fabric-like pattern against the surface protective layer, the layered body was embossed to obtain a layered sheet.

The thickness of the layered sheet obtained was 700 µm, the mass per unit area of the resin layer (total of non-foamed resin layer B, foamed resin layer, non-foamed resin layer A, picture pattern layer and surface protective layer) in the layered sheet was 90 g/m² and the density of the foamed resin layer was 0.12 g/cm³. In this connection, the density of the foamed resin layer was calculated by calculating the volume from the layered sheet cross-sectional area per unit length and dividing the mass of resin by the volume.

Moreover, the layered sheet obtained was subjected to the test for tear strength, whereupon the displacement from the first maximum point of the tensile strength in the width direction to the second maximum point thereof was 1.92 mm.

### Example 2

A foamed layered sheet was produced in the same manner as in the above-mentioned Example 1 except that the pattern with which embossing was performed at the time of foaming was changed to a stucco-like pattern. The thickness of the layered sheet obtained was 500 µm, the mass per unit area of the resin layer (total of non-foamed resin layer B, foamed resin layer, non-foamed resin layer A, picture pattern layer and surface protective layer) in the layered sheet was 90 g/m² and the density of the foamed resin layer was 0.23 g/cm³. In this connection, the density of the foamed resin layer was calculated by calculating the volume from the foamed sheet cross-sectional area per unit length and dividing the mass of resin by the volume. Moreover, the layered sheet obtained was subjected to the test for tear strength, whereupon the displacement from the first maximum point of the tensile strength in the width direction to the second maximum point thereof was 1.64 mm.

### Example 3

A layered sheet was produced in the same manner as in Example 1 except that the foaming agent-containing resin layer was changed to a layer having the following composition. The foaming agent-containing resin layer was formed from a resin prepared by kneading 90 parts by mass of ethylene-vinyl acetate copolymerization (with a vinyl acetate content of 33% by mass; "Evaflex EV150", produced by DUPONT-MITSUI POLYCHEMICALS CO., LTD.), 10 parts by weight of linear low density polyethylene ("UMERIT 613A", produced by Ube-Maruzen Polyethylene Co., LTD.), 20 parts by mass of calcium carbonate ("Whiton PC", produced by Shiraishi Kogyo Kaisha, Ltd.), 20 parts by mass of a coloring agent ("Ti-Pure R350", produced by Du Pont Kabushiki Kaisha), 3 parts by mass of a foaming agent ("VINYFOR AC#3", produced by EIWA CHEMICAL IND. CO., LTD.), 3 parts by mass of a foaming auxiliary agent ("ADK STAB OF-101", produced by ADEKA CORPORATION) and 0.3 parts by mass of a crosslinking auxiliary agent ("OPSTAR JUA 702", produced by JSR Corporation).

The thickness of the layered sheet obtained was 630 µm, the mass of the resin layer (total of non-foamed resin layer B, foamed resin layer, non-foamed resin layer A, picture pattern layer and surface protective layer) in the layered sheet was 90 g/m² and the density of the foamed resin layer was 0.14 g/cm³. In this connection, the density of the foamed resin layer was calculated by calculating the volume from the layered sheet cross-sectional area per unit length and dividing the mass of resin by the volume.

Moreover, the layered sheet obtained was subjected to the test for tear strength, whereupon the displacement from the first maximum point of the tensile strength in the width direction to the second maximum point thereof was 4.18 mm.

### Comparative Example 1

A plastisol of a resin composition made of 100 parts by mass of polyvinyl chloride ("PQB83", produced by Shin Dai-ichi Vinyl Corporation), 38 parts by mass of a plasticizing agent ("DINP", produced by CG ESTER CORPORATION), 21 parts by mass of a coloring agent ("DE-24", produced by NIKKO BICS CO., LTD.), 3 parts by mass of a foaming agent ("VINYFOR AC#3", produced by EIWA CHEMICAL IND. CO., LTD.), 3.25 parts by mass of a stabilizing agent ("ADK STAB FL-47", produced by ADEKA CORPORATION), 2 parts by mass of a stabilizing agent ("ADK STAB O-111", produced by ADEKA CORPORATION), 18.1 parts by mass of a diluent ("Shellsol S", produced by Shell Chemicals Japan Ltd.) and 90 parts by mass of calcium carbonate ("Whiton H", produced by Shiraishi Kogyo Kaisha, Ltd.) was prepared. The plastisol was applied onto a sheet of a wallpaper sheet (WK-665, manufactured by KOHJIN Holdings Co., Ltd.), made of paper pulp, with a width of 970 mm using a comma coater, and was allowed to turn into a semi-cured gel in a drying furnace at 150°C to obtain a layered body in which a foaming agent-containing resin layer was layered on the wallpaper sheet. The thickness of the foaming agent-containing resin layer of the layered body obtained was 110 µm.

Then, on the foaming agent-containing resin layer surface of the resin sheet obtained, with a gravure printing machine, using an aqueous ink ("Hydric", produced by Dainichiseika Color & Chemicals Mfg. Co., Ltd.) for pattern printing, a cloth pattern was printed to form a picture pattern layer. Afterward, with a gravure printing machine, on the picture pattern layer, an aqueous ink (ALTOP-402B, produced by Dainichiseika Color & Chemicals Mfg. Co., Ltd., acryl-based one-pack curing type resin) was printed to form a surface protective layer.

Next, the layered body obtained was heated (at 220°C for 35 seconds) in an oven to allow the foaming agent-containing resin layer to foam, forming a foamed resin layer. Afterward, by pressing a metal roll having a woven fabric-like pattern against the surface protective layer, the layered body was embossed to obtain a layered sheet. The thickness of the layered sheet obtained was 650 µm, the mass of the resin layer (total of foamed resin layer, picture pattern layer and surface protective layer) in the layered sheet was 176 g/m² and the density of the foamed resin layer was 0.32 g/cm³. In this connection, the density of the foamed resin layer was calculated by calculating the volume from the layered sheet cross-sectional area per unit length and dividing the mass of resin by the volume.

Moreover, the layered sheet obtained was subjected to the test for tear strength, whereupon the displacement from the first maximum point of the tensile strength in the width direction to the second maximum point thereof was 0.45 mm.

### Comparative Example 2

A layered sheet was produced in the same manner as in the above-mentioned Comparative Example 1 except that the pattern with which embossing was performed at the time of foaming was changed to a stucco-like pattern. The thickness of the layered sheet obtained was 500 µm, the mass of the resin layer (total of foamed resin layer, picture pattern layer and surface protective layer) in the layered sheet was 176 g/m² and the density of the foamed resin layer was 0.44 g/cm³. In this connection, the density of the foamed resin layer was calculated by calculating the volume from the layered sheet cross-sectional area per unit length and dividing the mass of resin by the volume.

Moreover, the layered sheet obtained was subjected to the test for tear strength, whereupon the displacement from the first maximum point of the tensile strength in the width direction to the second maximum point thereof was 0.55 mm.

### Comparative Example 3

A layered sheet was produced in the same manner as in Example 1 except that the non-foamed resin A and the foaming agent-containing resin layer were changed to those each having the following composition, and the electron beam irradiation conditions were changed to the conditions of 195 kV and an irradiation dose of 60 kGy. The non-foamed resin A was formed from an ethylene-methacrylic acid copolymer ("Nucrel N1560", produced by DUPONT-MITSUI POLYCHEMICALS CO., LTD.). Moreover, the foaming agent-containing resin layer was formed from a resin prepared by kneading 100 parts by mass of an ethylene-methacrylic acid copolymer ("Nucrel N1110H", produced by DUPONT-MITSUI POLYCHEMICALS CO., LTD.), 15 parts by mass of calcium carbonate ("Whiton P-30", produced by Shiraishi Kogyo Kaisha, Ltd.), 30 parts by mass of a coloring agent ("Ti-Pure R350", produced by Du Pont Kabushiki Kaisha), 6.3 parts by mass of a foaming agent ("VINYFOR AC#3", produced by EIWA CHEMICAL IND. CO., LTD.) and 6.3 parts by mass of a foaming auxiliary agent ("ADHS", produced by Otsuka Chemical Co., Ltd.).

The thickness of the layered sheet obtained was 550 µm, the mass of the resin layer (total of non-foamed resin layer B, foamed resin layer, non-foamed resin layer A, picture pattern layer and surface protective layer) in the layered sheet was 89 g/m² and the density of the foamed resin layer was 0.16 g/cm³. In this connection, the density of the foamed resin layer was calculated by calculating the volume from the layered sheet cross-sectional area per unit length and dividing the mass of resin by the volume.

Moreover, the layered sheet obtained was subjected to the test for tear strength, whereupon the displacement from the first maximum point of the tensile strength in the width direction to the second maximum point thereof was 0.60 mm.

### Experiment 1 (Evaluation for breakage resistance against positional displacement of backing)

The layered sheets of Examples 1 to 2 and Comparative Examples 1 to 2 each were evaluated for the breakage resistance against positional displacement of backing in the following manner. When an earthquake-resistant structure is subjected to the shake of an earthquake, by the occurrence of breaking in a backing board for interior finishing and the occurrence of a gap at the joint of a backing board for interior finishing, a clearance is newly generated in the backing board for interior finishing and breakage of the wallpaper is generated along the clearance. In the measurement of breakage resistance of this experiment, physical stress to the wallpaper in an earthquake-resistant structure subjected to an earthquake is simulatively reproduced.

Two gypsum boards ("TIGER BOARD", manufactured by Yoshino Gypsum Co., Ltd.) with a square of 99 mm × 99 mm and a thickness of 9.5 mm were prepared. With their sides of two gypsum boards snugly abutted, each of the layered sheets was pasted with a starch-based adhesive so as to cover the whole face of two gypsum boards. In this case, the flow direction of the layered sheet (direction perpendicular to the width direction of a wallpaper sheet) was set so as to be parallel to the sides of two gypsum boards abutted.

Then, drying was performed at room temperature to allow the gypsum board and the layered sheet to sufficiently bond together, after which, in the direction perpendicular to the sides of two gypsum boards abutted, the two gypsum boards were pulled apart to allow a clearance of 2.0 mm or 2.5 mm to be generated at the abutted portion of the two gypsum boards. On that occasion, the layered sheet was observed for the visual appearance and evaluated according to the following criteria.

### <Criteria for judgment in visual appearance of layered sheet>

○: No breakage of the layered sheet was observed.
×: Breakage of the layered sheet was observed at the abutted portion of the two gypsum boards.

The obtained results are shown in Table 1. As apparent from Table 1, with regard to the layered sheets in which the displacement from the first maximum point to the second maximum point in the above-mentioned test for tear strength is less than 1 mm (Comparative Examples 1 to 2), since the sheet fails to follow the positional displacement of the gypsum board of 2.0 mm or more, breakage is generated and the outside appearance shape is impaired. In contrast, with regard to the layered sheets in which the displacement from the first maximum point to the second maximum point in the above-mentioned test for tear strength is 1 to 5 mm (Examples 1 to 3), since the sheet can follow even the positional displacement of the gypsum board of 2.5 mm, the outside appearance shape has been stably maintained without breakage. In general, it has been thought that the positional displacement of backing of about 2.5 mm is generated in a backing board for interior finishing when an earthquake-resistant structure is swung by an earthquake. As a result, it has been confirmed that the layered sheets of Examples 1 and 2 which are not broken even when the clearance between the gypsum boards of about 2.5 mm is generated exhibit properties suitable as the backing board for interior finishing of an earthquake-resistant structure.

**[Table 1]**

| | | Example 1 | Example 2 | Example 3 | Comparative Example 1 | Comparative Example 2 | Comparative Example 3 |
|---|---|---|---|---|---|---|---|
| Displacement in width direction from first maximum point to second maximum point in test for tear strength (mm) | | 1.92 | 1.64 | 4.18 | 0.45 | 0.55 | 0.60 |
| Clearance between gypsum boards | 2.0 mm | ○ | ○ | ○ | × | × | × |
| | 2.5 mm | ○ | ○ | ○ | × | × | × |

## Claims

1. Use of a sheet, the sheet being a layered structure obtained by layering a resin layer including at least a foamed resin layer on a fibrous base material, for covering the wall of an earthquake-resistant structure, which is to be pasted to a backing board for interior finishing of an earthquake-resistant structure, and wherein the displacement from the first maximum point of the tensile strength in the width direction of the sheet, said width direction being the direction perpendicular to the fiber arrangement direction of the fibrous base material, measured at a tensile speed of 3 mm/minute and at a distance between grippers of 800 mm in the testing method for tear strength of sheeting defined in JIS K7128-3 to the second maximum point thereof being 1 to 5 mm.

2. The use according to claim 1, wherein the resin layer has a layered structure obtained by layering a non-foamed resin layer on an upper surface and/or lower surface of the foamed resin layer.

3. The use according to claim 1 or 2, wherein the mass per unit area of the resin layer is 70 to 110 g/m² and the density of the foamed resin layer included in the resin layer is 0.1 to 0.3 g/cm³.

4. The use according to any one of claims 1 to 3, wherein the foamed resin layer is formed by a resin containing at least polyethylene.

5. The use according to any one of claims 1 to 4, wherein the foamed resin layer is crosslinked.

6. A method for screening a sheet for covering the wall of an earthquake-resistant structure, which is to be pasted to a backing board for interior finishing of an earthquake-resistant structure, comprising
Step 1 of using a layered sheet, in which a resin layer including at least a foamed resin layer is layered on a fibrous base material, as a candidate sheet to measure the displacement from the first maximum point of the tensile strength in the width direction of the candidate sheet, said width direction being the direction perpendicular to the fiber arrangement direction of the fibrous base material, to the second maximum point thereof at a tensile speed of 3 mm/minute and at a distance between grippers of 800 mm in the testing method for tear strength of sheeting defined in JIS K7128-3, and
Step 2 of selecting a candidate sheet, in which the displacement measured in Step 1 is 1 to 5 mm, as a sheet for covering the wall of an earthquake-resistant structure.

7. A method for covering the wall of an earthquake-resistant structure, comprising
Step I of using a layered sheet, in which a resin layer including at least a foamed resin layer is layered on a fibrous base material, as a candidate sheet and selecting one in which the displacement from the first maximum point of the tensile strength in the width direction, said width direction being the direction perpendicular to the fiber arrangement direction of the fibrous base material, measured at a tensile speed of 3 mm/minute and at a distance between grippers of 800 mm in the testing method for tear strength of sheeting defined in JIS K7128-3 to the second maximum point thereof is 1 to 5 mm among the candidate sheets, and
Step II of pasting the layered sheet selected in Step I to a backing board for interior finishing of an earthquake-resistant structure.

## Patentansprüche

1. Verwendung einer Lage, wobei die Lage eine Schichtstruktur ist, erhalten durch Schichten einer Harzschicht, welche mindestens eine geschäumte Harzschicht auf einem faserartigen Basismaterial einschließt, zum Bedecken der Wand einer erdbebenbeständigen Struktur, welche auf einen Aufklebekarton zum inneren Endfertigen einer erdbebenbeständigen Struktur geklebt wird, und wobei die Verschiebung von dem ersten Maximalpunkt der Zugfestigkeit in der Breitenrichtung der Lage, wobei die Breitenrichtung die Richtung senkrecht zu der Faseranordnungsrichtung des faserartigen Basismaterials ist, gemessen bei einer Zuggeschwindigkeit von 3 mm/Minute und bei einem Abstand zwischen Klemmbacken von 800 mm in dem Testverfahren zur Reißfestigkeit von Verkleidungsmaterialien, definiert in JIS K7128-3, zu dem zweiten Maximalpunkt davon 1 bis 5 mm ist.

2. Verwendung gemäß Anspruch 1, wobei die Harzschicht eine Schichtstruktur aufweist, erhalten durch Schichten einer nicht-geschäumten Harzschicht auf einer oberen Oberfläche und/oder unteren Oberfläche der geschäumten Harzschicht.

3. Verwendung gemäß Anspruch 1 oder 2, wobei die Masse pro Einheitsfläche der Harzschicht 70 bis 110 g/m² und die Dichte der geschäumten Harzschicht, enthalten in der Harzschicht, 0,1 bis 0,3 g/cm³ ist.

4. Verwendung gemäß einem der Ansprüche 1 bis 3, wobei die geschäumte Harzschicht durch ein Harz, enthaltend mindestens Polyethylen, gebildet ist.

5. Verwendung gemäß einem der Ansprüche 1 bis 4, wobei die geschäumte Harzschicht vernetzt ist.

6. Verfahren zum Screenen einer Lage zum Bedecken der Wand einer erdbebenbeständigen Struktur, welche auf einen Aufklebekarton zum inneren Endfertigen einer erdbebenbeständigen Struktur geklebt wird, umfassend
Schritt 1 des Verwendens einer geschichteten Lage, worin eine Harzschicht, die mindestens eine geschäumte Harzschicht einschließt, auf ein faserartiges Basismaterial gelegt wird, als eine Kandidatlage zum Messen der Verschiebung von dem ersten Maximalpunkt der Zugfestigkeit in der Breitenrichtung der Kandidatlage, wobei die Breitenrichtung die Richtung senkrecht zu der Faseranordnungsrichtung des faserartigen Basismaterials ist, zu dem zweiten Maximalpunkt davon bei einer Zugeschwindigkeit von 3 mm/Minute und bei einem Abstand zwischen Klemmbacken von 800 mm in dem Testverfahren zur Reißfestigkeit von Verkleidungsmaterialien, definiert in JIS K 7128-3, und
Schritt 2 des Auswählens einer Kandidat-Lage, worin die Verschiebung, gemessen in Schritt 1, 1 bis 5 mm ist, als eine Lage zum Bedecken der Wand einer erdbebenbeständigen Struktur.

7. Verfahren zum Bedecken der Wand einer erdbebenbeständigen Struktur, umfassend
Schritt 1 des Verwendens einer geschichteten Lage, worin eine Harzschicht, die mindestens eine geschäumte Harzschicht einschließt, auf ein faserartiges Basismaterial gelegt wird, als eine Kandidat-Lage und Auswählen einer, worin die Verschiebung von dem ersten Maximalpunkt der Zugfestigkeit in der Breitenrichtung, wobei die Breitenrichtung die Richtung senkrecht zu der Faseranordnungsrichtung des faserartigen Basismaterials ist, gemessen bei einer Zuggeschwindigkeit von 3 mm/Minute und bei einem Abstand zwischen Klemmbakken von 800 mm in dem Testverfahren zur Reißfestigkeit von Verkleidungsmaterialien, definiert in JIS K 7128-3, zu dem zweiten Maximalpunkt davon 1 bis 5 mm unter den Kandidat-Lagen ist, und
Schritt II des Klebens der geschichteten Lage, ausgewählt in Schritt I, auf einen Aufklebekarton zum inneren Endfertigen einer erdbebenbeständigen Struktur.

## Revendications

1. Utilisation d'une feuille, la feuille étant une structure stratifiée obtenue en stratifiant une couche de résine incluant au moins une couche de résine expansée sur un matériau de base fibreux, pour recouvrir la paroi d'une structure résistant aux tremblements de terre, qui doit être collée à un panneau de base pour finition intérieure d'une structure résistant aux tremblements de terre, et dans laquelle le déplacement du premier point maximal de la résistance à la traction dans le sens de la largeur de la feuille, ledit sens de la largeur étant la direction perpendiculaire à la direction d'agencement des fibres du matériau de base fibreux, mesurée à une vitesse de traction de 3 mm/minute et à une distance entre des pinces de 800 mm dans le procédé d'essai pour la résistance au déchirement de la mise en feuille défini dans JIS K7128-3 au second point maximal de celle-ci est de 1 à 5 mm.

2. Utilisation selon la revendication 1, dans laquelle la couche de résine a une structure stratifiée obtenue en stratifiant une couche de résine non expansée sur une surface supérieure et/ou surface inférieure de la couche de résine expansée.

3. Utilisation selon la revendication 1 ou 2, dans laquelle la masse par aire unitaire de la couche de résine est de 70 à 110 g/m² et la densité de la couche de résine expansée inclue dans la couche de résine est de 0,1 à 0,3 g/cm³.

4. Utilisation selon l'une quelconque des revendications 1 à 3, dans laquelle la couche de résine expansée est formée par une résine contenant au moins du polyéthylène.

5. Utilisation selon l'une quelconque des revendications 1 à 4, dans laquelle la couche de résine expansée est réticulée.

6. Procédé de tri d'une feuille pour recouvrir la paroi d'une structure résistant aux tremblements de terre, qui doit être collée à un panneau de base pour finition intérieure d'une structure résistant aux tremblements de terre, comprenant
l'étape 1 consistant à utiliser une feuille stratifiée, dans laquelle une couche de résine incluant au moins une couche de résine expansée est stratifiée sur un matériau de base fibreux, en tant que feuille candidate pour mesurer le déplacement du premier point maximal de la résistance à la traction dans le sens de la largeur de la feuille candidate, ledit sens de la largeur étant la direction perpendiculaire à la direction d'agencement des fibres du matériau de base fibreux, au second point maximal de celle-ci à une vitesse de traction de 3 mm/minute et à une distance entre des pinces de 800 mm dans le procédé d'essai pour la résistance au déchirement de la mise en feuille défini dans JIS K7128-3, et
l'étape 2 consistant à sélectionner une feuille candidate, dans laquelle le déplacement mesuré à l'étape 1 est de 1 à 5 mm, en tant que feuille pour recouvrir la paroi d'une structure résistant aux tremblements de terre.

7. Procédé pour recouvrir la paroi d'une structure résistant aux tremblements de terre, comprenant
l'étape I consistant à utiliser une feuille stratifiée, dans laquelle une couche de résine incluant au moins une couche de résine expansée est stratifiée sur un matériau de base fibreux, en tant que feuille candidate et sélectionner une feuille dans laquelle le déplacement du premier point maximal de la résistance à la traction dans le sens de la largeur, ledit sens de la largeur étant la direction perpendiculaire à la direction d'agencement des fibres du matériau de base fibreux, mesurée à une vitesse de traction de 3 mm/minute et à une distance entre des pinces de 800 mm dans le procédé d'essai pour la résistance au déchirement de la mise en feuille défini dans JIS K7128-3 au second point maximal de celle-ci est de 1 à 5 mm parmi les feuilles candidates, et
l'étape II consistant à coller la feuille stratifiée sélectionnée à l'étape I à un panneau de base pour finition intérieure d'une structure résistant aux tremblements de terre.
